# EUROPÄISCHE PATENTSCHRIFT

(11) **EP 2 926 993 B1**
(45) Veröffentlichungstag und Bekanntmachung des Hinweises auf die Patenterteilung: **10.01.2018**
(21) Anmeldenummer: 15163698.2
(22) Anmeldetag: 09.11.2006
(51) Int. Cl.: B32B 37/12, B32B 37/18

(54) **VERFAHREN ZUM AUFBRINGEN EINER FOLIE AUF EINEN TRÄGER**
METHOD FOR APPLYING A FILM TO A SUBSTRATE
PROCÉDÉ D'APPLICATION D'UNE FEUILLE SUR UN SUPPORT

(30) Priorität: 23.12.2005 DE 102005062396
(43) Veröffentlichungstag der Anmeldung: 07.10.2015
(62) Teilanmeldung aus: 12166479.1
(73) Patentinhaber: Atlantic Zeiser GmbH, 78576 Emmingen (DE)
(72) Erfinder: Berndtsson, Anders, 42934 Kullavik (SE)
(74) Vertreter: Beyer, Carsten

(56) Entgegenhaltungen:
- WO-A-01/87599
- WO-A-2004/011256
- DE-A1- 2 817 917
- US-A1- 2002 027 586

## Beschreibung

Die Erfindung betrifft ein Verfahren zum Aufbringen einer Folie auf einen Träger Der Träger wird irreversibel mit der Folie zumindest partiell überzogen.

Es geht hier um die Verarbeitung flächiger Träger, die zum Schutz darauf befindlicher Informationen zumindest partiell mit einer Folie überzogen bzw. beschichtet werden. Dabei kann es sich um sogenannte Kunststoffkarten handeln, wie sie beispielsweise als permanente Eintrittskarten mit zusätzlichem Magnetstreifen, Transponder oder dgl. Verwendung finden. Mittlerweile nutzen unterschiedlichste Einrichtungen und Organisationen entsprechende Karten, beispielsweise Banken, Videotheken, Buchclubs, Fitnesscenter, etc.

Regelmäßig werden Karten der hier in Rede stehenden Art mit Informationen jedweder Art bedruckt. Im einfachsten Falle mittels Drucker oder Kopiergerät.

Der voranstehend genannte Stand der Technik ist aus der Praxis hinlänglich bekannt. Üblicherweise wird der Träger nach dem Bedrucken und/oder nach Ausstattung mit sonstigen optisch und/oder elektronisch lesbaren Informationen mit einer durchsichtigen Folie abgedeckt. Um diese Folie irreversibel auf den Träger aufzubringen, wird ein Verfahren angewandt, wonach ein durchsichtiger Schmelzklebstoff bei recht hoher Temperatur zwischen dem Träger und der Folie adhäsiv wirkt. Meist befindet sich der durchsichtige Klebstoff auf der Folie, die unter Temperatur- und Druckeinwirkung auf den Träger aufgepresst wird.

Die Anwendung relativ hoher Temperaturen ist in der Praxis jedoch problematisch, da die dadurch erzielte Haftung aufgrund der sich einstellenden Grenzflächenenergie oft nur unzureichend ist. Außerdem wird durch das Aufheizen wie auch durch das Abkühlen insbesondere die automatische Fertigung verlangsamt. So handelt es sich bei der Erwärmung und beim Abkühlen um zeitkritische Verfahrensschritte, die außerdem einen ganz erheblichen apparativen Aufwand erfordern. Ein laminierter Träger bzw. eine so hergestellte beschichtete Kunststoffkarte kann erst nach dem Abkühlen gehandhabt werden. Auch bei einer Einzelfertigung, so bspw. in einer Videothek, ist dies problematisch, verursacht das Aufheizen und Abkühlen erhebliche Wartezeiten. Außerdem besteht bei Temperaturanwendung jedenfalls dann eine Verletzungsgefahr, wenn die dazu dienende Vorrichtung unsachgemäß bedient wird. Schließlich ist der Energieverbrauch einer entsprechenden Vorrichtung erheblich.

Aus DE 28 17 917 A1 ist ein gattungsbildendes Verfahren zur Herstellung einer Kaschierung, bestehend aus einem Druckträger, einer Kunststofffolie und einem Haftmittel, bekannt, wobei auf eine Kunststofffolienbahn ein Haftmittel aufgetragen und die Folienbahn mit Haftmittel mit einer Druckträgerbahn zusammengeführt und anschließend die kaschierte Bahn weiterverarbeitet wird. Als Haftmittel wird ein UVtrocknendes Klebemittel auf der Basis der Komponenten eines UV-trocknenden Lackes aufgetragen und die zusammengeführte Bahn folienseitig mit UV-Strahlung bestrahlt. Bei dem Druckträger handelt es sich um Papier, Karton oder dergleichen, wobei der aufgerollte Druckträger nach der UV-Bestrahlung durch eine Schneidvorrichtung in Stücke geschnitten wird.

Der vorliegenden Erfindung liegt daher die Aufgabe zugrunde, ein Verfahren der gattungsbildenden Art derart auszugestalten und weiterzubilden, dass die Fertigung mit geringerer Taktzeit und unter Vermeidung der voranstehend genannten Probleme erfolgen kann. Außerdem soll nach dem erfindungsgemäßen Verfahren ein irreversibles Aufbringen der Folie auf den Träger realisierbar sein, so dass ein Fälschen der Karte ganz erheblich erschwert ist.

Die voranstehende Aufgabe wird erfindungsgemäß durch ein Verfahren mit den Merkmalen des Patentanspruchs 1 gelöst.

Entsprechend den Merkmalen des Patentanspruchs 1 wird der Träger aus Kunststoff irreversibel unter der Folie zumindest partiell überzogen, mit den folgenden Verfahrensschritten:
Bereitstellen des Trägers (4),
Beschichten des Trägers (4) mit einer dünnen Schicht eines transparenten, unter Einwirkung elektromagnetischer Wellen aushärtenden Haftvermittlers (8),
Zusammenbringen von Träger (4) und Folie (5) und
Aushärten des Haftvermittlers (8) unter Einwirkung elektromagnetischer Wellen, insbesondere unter Lichteinwirkung

Das Verfahren ist dadurch gekennzeichnet, dass
vor oder in der Fügestation ein Zuschnitt des Trägers (4) erfolgt.

Zunächst einmal wird der mit der Folie zumindest teilweise zu beschichtende bzw. zu überdeckende Träger bereitgestellt, wobei es sich bei dem Träger - entsprechend den voranstehenden Ausführungen - um eine Karte handeln kann. Die Karte kann wiederum als Kunststoffkarte ausgeführt sein. Der Träger wird wie auch immer bereitgestellt, so bspw. aus einem Magazin bzw. Depot heraus. Von dort aus wird er entsprechend dem Bedarf gefördert.

In einem nächsten Schritt wird der Träger oder die Folie mit einer dünnen Schicht eines transparenten Haftvermittlers beschichtet, wobei der Haftvermittler unter Einwirkung elektromagnetischer Wellen aushärtet. Es ist durchaus auch denkbar, dass sowohl der Träger als auch die Folie mit dem Haftvermittler beschichtet werden, wobei es sich bei dem Haftvermittler auch um einen Zweikomponentenklebstoff handeln kann und wobei die beiden Komponenten unter Einwirkung elektromagnetischer Wellen miteinander reagieren können.

Alternativ ist es denkbar, eine bereits mit dem transparenten Haftvermittler beschichtete Folie bereitzustellen, wobei auch dort der Haftvermittler unter Einwirkung elektromagnetischer Wellen aushärtet.

An dieser Stelle sei angemerkt, dass der Haftvermittler grundsätzlich unter Einwirkung elektromagnetischer Wellen aushärtet, wobei es sich dabei insbesondere um eine Lichteinwirkung handelt. In Abgrenzung zu der Aushärtung durch Temperatureinwirkung sei angemerkt, dass es hier um eine Einwirkung ohne Temperaturerhöhung oder bei nur geringer Temperaturerhöhnung des Trägers geht. Insoweit unterscheidet sich das Verfahren von einem herkömmlichen Verfahren unter Anwendung hoher Temperaturen.

Wesentlich ist, dass der Träger und die Folie - in welcher geometrischen Anordnung auch immer - zusammengebracht werden. Im zusammengebrachten Zustand findet ein Verkleben zwischen der Folie und dem Träger statt, wobei der Haftvermittler unter Einwirkung elektromagnetischer Wellen aushärtet. Eine irreversible Abdeckung des Trägers durch die Folie ist geschaffen, wobei die auf dem Träger befindlichen Informationen durch die transparente Folie hindurch sichtbar sind.

Es sei weiter angemerkt, dass es sich bei dem Haftvermittler um einen Klebstoff jedweder Art handeln kann der beispielsweise unter Lichteinwirkung aushärtet. So handelt es sich bei dem Haftvermittler um einen Klebstoff, der - mehr oder weniger - im kalten Zustand aushärtet, im Gegensatz zu den aus der Praxis bekannten Anwendungen, wonach der Haftvermittler unter Temperatureinfluss aushärtet.

Des Weiteren ist es denkbar, dass die Folie den Träger insgesamt, d.h. vollflächig, überdeckt. Ebenso ist es jedoch auch möglich, die Folie nur bereichsweise auf den Träger aufzubringen. Auch lassen sich mit dem Material der Folie entsprechende Muster bzw. Konturen realisieren. Des Weiteren lässt sich die Folie mit Aussparungen auf den Träger aufbringen, und zwar entsprechend dem jeweiligen Bedarf.

Noch einmal sei darauf hingewiesen, dass zum Verkleben von Träger und Folie ein Haftvermittler verwendet wird, der unter Einwirkung elektromagnetischer Wellen, insbesondere unter Lichteinwirkung, aushärtet. Dabei spielt es zunächst keine Rolle, wo und wie der Haftvermittler aufgebracht wird. So ist es ohne weiteres auch denkbar, dass sich der Haftvermittler bereits auf der Folienoberfläche befindet, nämlich auf der dem Folienträger abgewandten und dem Träger zugewandten Seite, so dass die Folie bereits mit dem Haftvermittler versehen von der Rolle abgewickelt und der Fügestation zugeführt werden kann.

Die Folie kann in Einzelstücken zur Verfügung gestellt werden, so dass diese der Klebestation und/oder der Fügestation - jeweils einzeln - zugeführt wird.

Bereits zuvor ist erwähnt worden, dass üblicherweise der Träger mit drucktechnisch aufgebrachten Informationen ausgestattet ist, die durch die Folie zu schützen sind. So ist es möglich, vor dem Zusammenbringen von Träger und Folie, vor allem aber auch vor einer Beschichtung des Trägers mit dem Haftvermittler, den Träger auf beliebige Art und Weise zu bedrucken oder mit elektronischen Informationen auszustatten.

Des Weiteren sei angemerkt, dass durch eine besondere Zuführung von Träger und Folie eine komplette oder partielle Beschichtung des Trägers mit der Folie realisierbar ist, nämlich dadurch, dass man den Träger und die Folie - bewusst - mit Versatz zueinander in die Fügestation fördert und entsprechend - einander teilweise überdeckend - kombiniert.

Des Weiteren sei angemerkt, dass auch der Träger bzw. das Substrat in Form eines Endlosbandes gefördert werden kann, wobei erfindungsgemäß vor oder in der Fügestation ein Zuschnitt erfolgt. Ebenso ist es dankbar, den Träger bzw. das Substrat auf einem bandförmigen Träger - bereits vorkonfektioniert - zur Verfügung zu stellen.

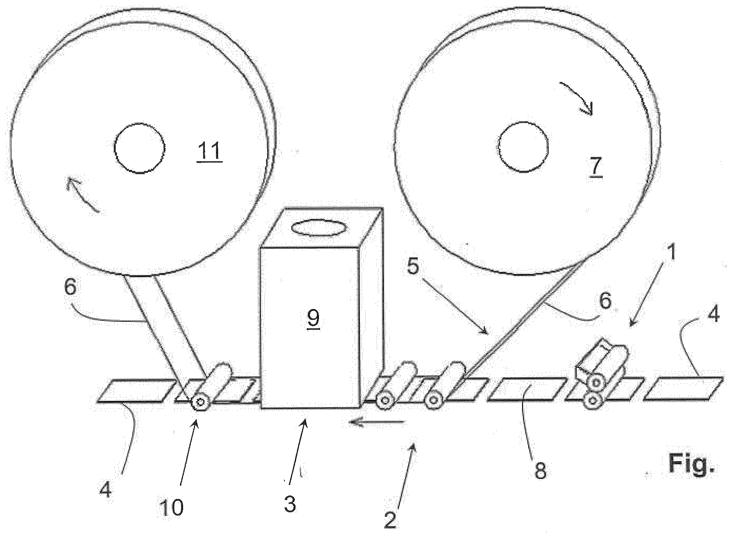

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- die einzige Fig.: in einer schematischen Ansicht die grundsätzliche Anordnung einer Vorrichtung, mit der sich das erfindungsgemäße Verfahren erläutern lässt.

Gemäß der einzigen Fig. umfasst die Vorrichtung eine Klebestation 1, eine Fügestation 2 und eine Härtestation 3.

Des Weiteren lässt die einzige Fig. erkennen, dass die zur Beschichtung des Trägers 4 dienende Folie 5 über ein Folienband 6 bereitgestellt wird, welches von der zur Bevorratung der Folie 5 dienenden Rolle 7 abgewickelt wird. Von dort aus gelangt das Folienband 6 bzw. die darauf befindliche Folie 5 unmittelbar zu der Fügestation 2.

Der Träger 4 wird bei dem hier gezeigten Ausführungsbeispiel linear zu der Klebestation 1 gefördert, wird dort an seiner Oberfläche mit dem durchsichtigen Haftvermittler 8 drucktechnisch beschichtet und wird von dort aus der Fügestation 2 zugeführt, in der die Kombination des Trägers 4 mit der Folie 5 erfolgt.

Nach dem Aufbringen der Folie 5 auf den Träger 4 (mit dem dazwischen befindlichen Haftvermittler 8) wird die so entstandene Anordnung verpresst.

Anschließend erfolgt in der Härtestation 3 eine Bestrahlung durch eine UV-Lichtquelle 9. Dort härtet der Haftvermittler 8 unter Bindung der Folie 5 an den Träger 4 aus, so dass in einer nachgeschalteten Trennstation 10 das Folienband 6 von der Folie 5 bzw. dem Träger 4 durch Umlenkung abhebbar ist. Von dort aus gelangt das Folienband 6 auf eine zur Entsorgung dienende Rolle 11, mit der das aufgewickelte Folienband 6 entsorgt werden kann. Der mit der Folie 5 beschichtete Träger 4 wird zur weiteren Bearbeitung und/oder Handhabung weiter gefördert.

Im Hinblick auf weitere Merkmale, die sich der einzigen Fig. nicht entnehmen lassen, sei zur Vermeidung von Wiederholungen auf den allgemeinen Teil der Beschreibung und auf die Patentansprüche verwiesen.

Schließlich sei angemerkt, dass das voranstehend erörterte Ausführungsbeispiel der beispielhaften Erörterung der beanspruchten Lehre dient, diese jedoch nicht auf das Ausführungsbeispiel einschränkt.

## Patentansprüche

1. Verfahren zum Aufbringen einer Folie (5) auf einen bedruckten Träger (4) aus Kunststoff, wobei der Träger (4) irreversibel mit der Folie (5) zumindest partiell überzogen wird, mit folgenden Verfahrensschritten:
Bereitstellen des Trägers (4),
Beschichten des Trägers (4) mit einer dünnen Schicht eines transparenten, unter Einwirkung elektromagnetischer Wellen aushärtenden Haftvermittlers (8),
Zusammenbringen von Träger (4) und Folie (5) und
Aushärten des Haftvermittlers (8) unter Einwirkung elektromagnetischer Wellen, insbesondere unter Lichteinwirkung,
**dadurch gekennzeichnet, dass** vor oder in der Fügestation ein Zuschnitt des Trägers (4) erfolgt.

2. Verfahren nach Anspruch 1, **dadurch gekennzeichnet, dass** die Folie (5) insgesamt, d.h. vollflächig, bereichsweise, in bzw. mit Mustern oder mit Aussparungen auf den Träger (4) aufgebracht wird.

## Claims

1. A method for applying a film (5) to an imprinted substrate (4) of plastics, wherein the substrate (4), at least in part, is being irreversibly coated with said film (5), comprising the following process steps:
providing the substrate (4),
coating the substrate (4) with a thin coat of a transparent adhesion promoter (8) curing under the influence of electromagnetic waves,
contacting the substrate (4) and the film (5), and
curing the adhesion promoter (8) under the influence of electromagnetic waves, in particular under the influence of light,
**characterized in that** a cutting of the substrate (4) occurs prior to or in the joining station.

2. The method according to claim 1, **characterized in that** the film (5) is applied globally, i.e. in full area, in certain areas, in or with patterns, respectively, or with gaps on the substrate (4).

## Revendications

1. Procédé d'application d'une feuille (5) sur un support imprimé (4) en plastique, dans lequel le support (4) est recouvert au moins partiellement de la feuille (5) de manière irréversible, avec les étapes de procédé suivantes:
mise à disposition du support (4),
enduction du support (4) avec une couche mince d'un promoteur d'adhésion transparent (8), durcissant sous l'action d'ondes électromagnétiques,
réunion du support (4) et de la feuille (5), et
durcissement du promoteur d'adhésion (8) sous l'action d'ondes électromagnétiques, notamment sous l'action de la lumière,
**caractérisé en ce qu'**une coupe du support (4) s'effectue avant ou dans la station d'assemblage.

2. Procédé selon la revendication 1, **caractérisé en ce que** la feuille (5) est appliquée sur le support (4) dans l'ensemble, c'est-à-dire sur toute la surface, par région, dans ou avec des dessins ou avec des évidements.
